(19) Europäisches Patentamt
European Patent Office
Office européen des brevets

(11) **EP 2 428 419 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(51) Int Cl.:
**B60W 10/10** *(2012.01)* **B60W 10/06** *(2006.01)*
**B60W 10/30** *(2006.01)* **B60W 30/18** *(2012.01)*

(21) Anmeldenummer: **11006666.9**

(22) Anmeldetag: **13.08.2011**

(54) **Verfahren zum Vorgeben eines Betriebspunktes einer Antriebsmaschine eines Antriebssystems**

Method for determining an operating point of a drive machine of a drive system

Procédé de programmation d'un point de fonctionnement d'un système d'entraînement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.09.2010 DE 102010044906**

(43) Veröffentlichungstag der Anmeldung:
**14.03.2012 Patentblatt 2012/11**

(73) Patentinhaber: **Robert Bosch GmbH**
**70469 Stuttgart (DE)**

(72) Erfinder:
• **Wagner, Horst**
**89168 Niederstotzingen (DE)**
• **Miller, Matthias**
**88416 Steinhausen (DE)**
• **Hense, Heinz**
**89231 Neu-Ulm (DE)**

(74) Vertreter: **Thürer, Andreas**
**Bosch Rexroth AG**
**BR/IPR**
**Zum Eisengiesser 1**
**97816 Lohr am Main (DE)**

(56) Entgegenhaltungen:
EP-A1- 1 655 469 EP-A2- 0 901 928
DE-A1-102006 055 725 DE-A1-102007 062 888
US-A1- 2002 123 836 US-A1- 2007 227 137

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Vorgeben eines Betriebspunktes einer Antriebsmaschine eines Antriebssystems umfassend die Antriebsmaschine und wenigstens zwei von der Antriebsmaschine angetriebene Verbraucher.

Stand der Technik

Die Erfindung wird im Wesentlichen unter Bezugnahme auf Antriebssysteme beschrieben, bei denen wenigstens ein Verbraucher einen hydrostatischen Antrieb umfasst. Zum Antreiben von hydrostatischen Antrieben werden meist Dieselmotoren oder Elektromotoren als Antriebsmaschinen eingesetzt. Der hydrostatische Antrieb umfasst üblicherweise eine von der Antriebsmaschine angetriebene hydrostatische Pumpe und einen damit verbundenen hydrostatischen Motor.

Konventionelle hydrostatische Antriebe sind auf den Nennleistungspunkt des Verbrennungsmotors ausgelegt und weisen dadurch im Teillastbereich einen nicht optimalen Wirkungsgrad auf. Es ist bekannt, im Teillastbereich die Drehzahl des Verbrennungsmotors abzusenken; um damit den Gesamtwirkungsgrad zu verbessern. Die EP 1 754 643 A1 beschreibt ein weiteres Verfahren zur Optimierung des Gesamtwirkungsgrads, mit dem allerdings nur ein einzelner hydrostatischer Verbraucher in einem eingeschränkten Lastbereich gesteuert werden kann.

Die gattungsbildende US 2002/0123836 A1 beschreibt ein Verfahren zum Ansteuern eines Verbrennungsmotors in einem Hybridfahrzeug, wobei eine Fahrleistung Ppd und eine Lade- und Entladeleistung Ppb bestimmt und zu einer Gesamtleistung Ppe addiert werden. Es wird eine Drehzahl für den Verbrennungsmotor aus einem Kennfeld entnommen, welche für die notwendige Leistung Ppe die niedrigsten Kosten verursacht.

Es ist daher wünschenswert, die Ansteuerung der Antriebsmaschine eines einführend genannten Antriebssystems zu verbessern, um den Wirkungsgrad auch für mehr als einen Verbraucher zu optimieren.

Offenbarung der Erfindung

Erfindungsgemäß wird ein Verfahren zum Vorgeben eines Betriebspunktes einer Antriebsmaschine eines Antriebssystems mit den Merkmalen des Patentanspruchs 1 vorgeschlagen. Vorteilhafte Ausgestaltungen sind Gegenstand der Unteransprüche sowie der nachfolgenden Beschreibung.

Die Erfindung beschreibt ein Verfahren, mit dem bei Vorliegen unterschiedlicher Leistungsanforderungen von unterschiedlichen Verbrauchern ein optimaler Betriebspunkt für die Antriebsmaschine ermittelt werden kann. Dabei wird je Verbraucher ein Teil-Anforderungspunkt, z.B. ein Drehmoment in Abhängigkeit von einer Drehzahl der Antriebsmaschine oder eine Abgabeleistung des Verbrauchers zusammen mit einem Wirkungsgrad der Leistungsübertragung, zur Bereitstellung einer erforderlichen Arbeitsleistung (Soll- oder Istzustand) bestimmt. Die Bestimmung erfolgt zweckmäßigerweise anhand eines Verbrauchermodells in einer Recheneinheit (üblicherweise Steuergerät). In Abhängigkeit vom konkreten Verbraucher werden ein oder mehrere Teil-Anforderungspunkte - ggf. auch wenigstens ein Intervall - erhalten, die zur Deckung des jeweiligen Leistungsbedarfs ausreichend sind. Durch die allgemeine Bestimmung eines Teil-Anforderungspunktes besteht insbesondere keine Einschränkung der Erfindung auf hydrostatische Antriebe als Verbraucher.

Alle Leistungsanforderungen bzw. Teil-Anforderungspunkte werden verknüpft, um wenigstens einen Gesamt-Anforderungspunkt, bspw. ein Gesamt-Drehmoment über einem gemeinsamen Drehzahlbereich, anzugeben. Wie zuvor erläutert, kann es sich dabei auch um ein oder mehrere Punkte und/oder Bereiche handeln.

Der wenigstens eine Gesamt-Anforderungspunkt wird mit einer von der Antriebsmaschine maximal abgebbaren Leistung verglichen, um eine Schnittmenge zu bestimmen. Es wird wenigstens ein Betriebspunkt ermittelt, in dem die Antriebsmaschine zur Abgabe der Gesamt-Anforderung in der Lage ist. Bspw. wird ein Abgabedrehzahlbereich ermittelt, in dem die Antriebsmaschine zur Abgabe des Gesamt-Drehmoments in der Lage ist. Für den Abgabedrehzahlbereich wird eine zur Abgabe der Gesamt-Anforderung notwendige Kostengröße bzw. Verbrauchsgröße, wie z.B. Kraftstoff oder elektrische Energie, Schadstoff- oder Geräuschemission, Lebensdauer u.ä., bestimmt. Vorzugsweise wird dann der Betriebspunkt mit den geringsten Kosten vorgegeben, wobei die Vorgabe des Betriebspunktes insbesondere über die Vorgabe der zugehörigen Drehzahl erfolgt. Die Bestimmung der Kostengröße kann in einem Antriebsmaschinenmodell erfolgen. Für die Betriebspunktauswahl können neben dem optimalen Gesamtwirkungsgrad auch andere Kriterien berücksichtigt werden, wie z.B. ein Leistungsvorhalt, um auf dynamische Anforderungen schnell reagieren zu können, weitere verbrennungsmotorische Anforderungen, z. B. an einen schnellen Warmlauf, Lebensdauerkriterien, um ein zu häufiges Auftreten hoher Drücke im hydraulischen System zu vermeiden usw.

Die Erfindung bietet die Möglichkeit, eine Optimierung eines Gesamtwirkungsgrades auch bei mehreren (auch unterschiedlichen) Verbrauchern vorzunehmen. Die Optimierung kann an allen Betriebspunkten und bei allen Lastanforderungen geschehen. Ein modularer Aufbau erlaubt eine verteilte Recheneinheit-Topologie und unterstützt die einfache Implementierung auch bei unterschiedlichen Varianten von Antriebssystemen. Das erfindungsgemäße Verfahren ermöglicht es, alle Verbraucher (gleichzeitig) in die Optimierung einzubeziehen. In vorteilhafter Weise wird eine Ansteuerung der Antriebsmaschine derart vorgenommen, dass die gleichzeitig gegebenen Anforderungen der Verbraucher mit minimalen Kosten erfüllt werden.

Ein Antriebssystem kann eine Reihe von Verbrauchern umfassen, wie z.B. Fahrantrieb, Arbeitshydraulik, Generator (Lichtmaschine), Lüfterantrieb, Klimaanlage usw. Jeder dieser Verbraucher benötigt eine gewisse Leistung, die er üblicherweise mittelbar oder unmittelbar als Produkt aus Drehmoment und Drehzahl an der Kurbelwelle der Antriebsmaschine abgreift. In bestimmten Betriebsfällen (z.B. hydrostatisches Bremsen) kann auch ein Drehmoment von den Verbrauchern zurück an die Kurbelwelle geleitet werden. Dieses Drehmoment kann dann vom gesamt aufzubringenden Drehmoment subtrahiert werden.

Es ist zweckmäßig, wenn bei der Ermittlung des momentanen Leistungsbedarfs eines Verbrauchers bereits eine optimale interne Einstellung berücksichtigt wird, wenn der Verbraucher Freiheitsgrade hat, den geforderten Betriebszustand darzustellen. Dafür kann das erfindungsgemäße Verfahren hierarchisch angewendet werden. Im Falle eines hydrostatischen Fahrantriebs kann ein Freiheitsgrad vorliegen, falls sowohl Pumpen- als auch Motorwinkel wählbar sind. In diesem Fall sollte zunächst eine Einstellung des Pumpen- und des Motorwinkels mit besonders hohem Wirkungsgrad vorgewählt werden.

Eine erfindungsgemäße Recheneinheit, z.B. ein Steuergerät eines Antriebssystems, ist, insbesondere programmtechnisch, dazu eingerichtet, ein erfindungsgemäßes Verfahren durchzuführen. Die Recheneinheit kann insbesondere auch eine Anzahl von verteilten Teil-Recheneinheiten umfassen, auf denen jeweils Teile des erfindungsgemäßen Verfahrens durchgeführt werden. Beispielsweise kann jeder Verbraucher mit einer eigenen Teil-Recheneinheit ausgestattet werden, die den jeweiligen Verbraucher betreffende Berechnungen durchführt und das Ergebnis bspw. an eine weitere Teil-Recheneinheit übermittelt, die für die Verknüpfung und Auswertung zuständig ist.

Auch die Implementierung der Erfindung in Form von Software ist vorteilhaft, da dies besonders geringe Kosten ermöglicht, insbesondere wenn eine ausführende Recheneinheit noch für weitere Aufgaben genutzt wird und daher ohnehin vorhanden ist. Geeignete Datenträger zur Bereitstellung des Computerprogramms sind insbesondere Disketten, Festplatten, Flash-Speicher, EEPROMs, CD-ROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

Figurenbeschreibung

Figur 1    zeigt schematisch ein Antriebssystem, wie es der Erfindung zugrunde liegen kann.

Figur 2    zeigt eine Ausführungsform der Erfindung anhand eines Ablaufschemas.

Figur 3    zeigt zwei Teil- und eine Haupt-Drehmomentanforderung über der Drehzahl.

Figur 4    zeigt die Haupt-Drehmomentanforderung gemäß Figur 3 sowie eine Drehmomentabgabe einer Antriebsmaschine über der Drehzahl.

Figur 5    zeigt beispielhaft eine Möglichkeit zur Bestimmung einer Drehmomentanforderung anhand eines Ablaufschemas.

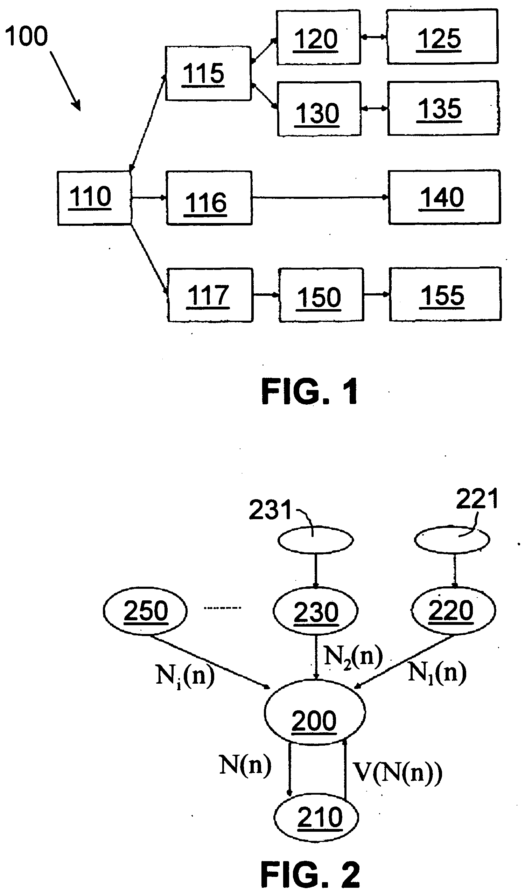

In Figur 1 ist ein Antriebssystem, wie es der Erfindung zugrunde liegen kann, schematisch dargestellt und insgesamt mit 100 bezeichnet. Das Antriebssystem kann beispielsweise als mobile Arbeitsmaschine ausgebildet sein. Das Antriebssystem 100 umfasst eine beispielsweise als Verbrennungsmotor 110 ausgebildete Antriebsmaschine sowie eine Anzahl von Verbrauchern 120, 130, 140 und 150.

Mit dem Verbrennungsmotor 110 sind beispielsweise über ein Verteilergetriebe 115 eine hydrostatische Antriebseinheit 120 sowie eine Arbeitshydraulikpumpe 130 verbunden. Die hydrostatische Arbeitseinheit 120 ist für die Fortbewegung des Antriebssystems 100 vorgesehen und wirkt dazu mit einem entsprechenden Getriebe 125 zusammen. Die Arbeitshydraulikpumpe 130 ist für die Bearbeitung vorgesehen und wirkt dazu mit entsprechenden Stellzylindern 135 zusammen.

Der Verbrennungsmotor 110 ist weiterhin über einen Riemenantrieb 116 mit einer Klimaanlage 140 verbunden.

Schließlich ist der Verbrennungsmotor 110 über einen Nebenabtrieb (PTO) 117 mit einem Generator 150 zur Erzeugung elektrischer Energie verbunden. An dem Generator 150 sind elektrische Verbraucher 155 angeschlossen.

In Ausgestaltung der Erfindung kann vorgesehen sein, den physikalischen Leistungsfluss innerhalb des Antriebssystems 100 zu modellieren, wie es nachfolgend anhand von Figur 2 erläutert wird.

In Figur 2 wird eine Ausführungsform der Erfindung schematisch dargestellt. Bei dieser Umsetzung wird zweckmäßigerweise jedem real vorliegenden Verbraucher 120, 125; 130, 135; 140; 150, 155 ein Modell 220, 230, 240 zugeordnet, z.B. ein Modell "Antriebsstrang" 220 für den Fahrantrieb 120, 125 der Arbeitsmaschine 100, ein Modell 230 für die Arbeitshydraulik 130, 135, ein Modell 250 für einen Lüfterantrieb 150, 155 usw. Den einzelnen Modellen können Eingangsgrößen zugeführt werden. Beispielsweise kann dem Modell "Antriebsstrang" 220 eine Fahrpedalstellung 221 und dem Modell "Arbeitshydraulik" 230 eine Joystickstellung 231 zugeführt werden, die jeweils vom Fahrer der Arbeitsmaschine vorgegeben werden.

Die Wirkungsgradoptimierung bedingt eine freie Wahl der Verbrennungsmotordrehzahl und der hydraulischen Steller in den Grenzen, die durch Bedienervorgaben und andere leistungsanfordernde Funktionen gegeben sind. Deshalb ist vorgesehen, die übliche unmittelbare Kopplung zwischen dem Bedienelement (Fahrpedal, Joystick, ... ) und den Stellern (Dieseleinspritzpumpe, Schwenkwinkel von Axialkolben-Maschinen) zu lösen. Anstelle dessen wird das Bedienelement als Vorgabe für eine mechanische Größe der Arbeits-/Antriebseinheit interpretiert. So kann beispielsweise die Position des Fahrpedals (Winkel) auf eine Fahrzeuggeschwindigkeit oder Antriebsleistung abgebildet werden.

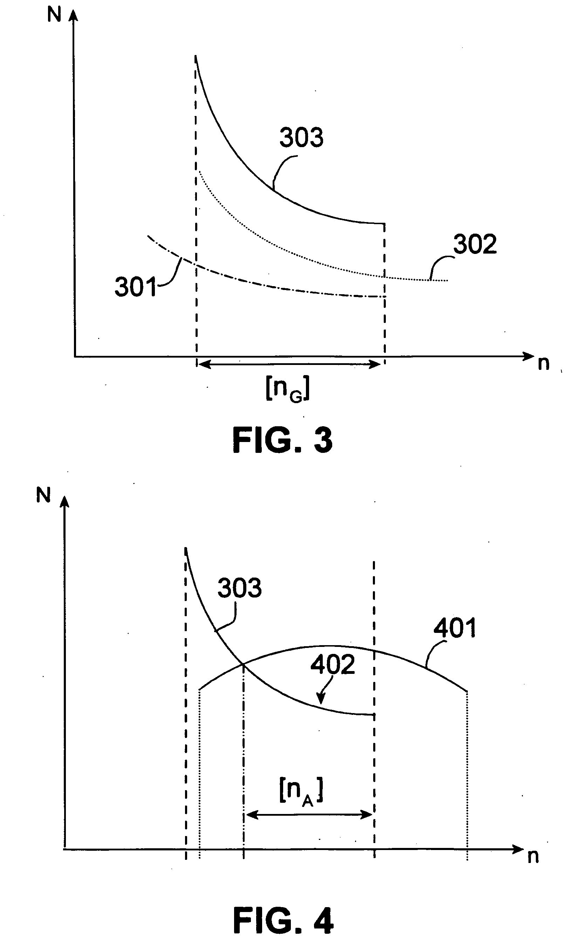

Jedes Modell 220, 230 usw. ermittelt den jeweiligen Leistungsbedarf. Insbesondere werden ein oder mehrere Teil-Anforderungspunkte bestimmt. Eine vorteilhafte Realisierung der Leistungsanforderung ist die Darstellung des Drehmomentbedarfs über der Drehzahl des Verbrennungsmotors 110, wie es später unter Bezugnahme auf Figur 3 erläutert wird. Der jeweilige Teil-Drehmomentbedarf $M_i(n)$ über der Drehzahl $n$ wird von den Modellen 220, 230 usw. an einen Koordinator 200 übermittelt, der die Anforderungen verknüpft und auswertet. Beispielsweise erzeugt der Koordinator eine Haupt-Drehmomentanforderung $M(n)$ über der Drehzahl $n$ und übermittelt diese an ein Modell 210 des Verbrennungsmotors 110. Das Modell 210 bestimmt für die Haupt-Drehmomentanforderung $M(n)$ eine Kostengröße, im vorliegenden Beispiel einen Kraftstoffverbrauch, für die Betriebspunkte, in denen der Verbrennungsmotor 110 zur Abgabe des angeforderten Haupt-Drehmoments $M(n)$ in der Lage ist. Der drehzahl- bzw. betriebspunktabhängige Verbrauch $V(M(n))$ wird vom Modell 210 an den Koordinator 200 übertragen, der darauf basierend eine Drehzahl $n_0$ mit einem geeigneten Wirkungsgrad auswählt und dem Verbrennungsmotor 110 vorgibt. Neben dem Wirkungsgrad bzw. Verbrauch können bei der Auswahl einer geeigneten Drehzahl auch andere Größen berücksichtigt werden, wie es bereits weiter oben erläutert worden ist.

Alternativ (jedoch nicht dargestellt) umfassen die Anforderungen eine Abgabeleistung des Verbrauchers und einen Wirkungsgrad der Leistungsübertragung an den Verbraucher. Der Koordinator bestimmt dann basierend auf den Teilleistungen und Wirkungsgraden die aufzubringende Gesamtleistung.

In Figur 3 sind u.a. Teil-Drehmomentanforderungen $M$ über der Drehzahl $n$ dargstellt, wie sie beispielsweise von den Modellen 220, 230 usw. gemäß Figur 2 an den Koordinator 200 geliefert werden. Beispielsweise wird eine erste Drehmomentanforderung 301 von dem Antriebsstrangmodell 220 und eine zweite Drehmomentanforderung 302 von dem Arbeitshydraulikmodell 230 geliefert. Der Koordinator 200 verknüpft diese Teil-Drehmomentanforderungen 301, 302 zu einer Haupt-Drehmomentanforderung 303. Gemäß der hier dargestellten Ausführungsform ist die Haupt-Drehmomentanforderung 303 eine Summe der einzelnen Teil-Drehmomentanforderungen 301 und 302 über dem gemeinsamen Drehzahlbereich $[n_G]$ als Schnittmenge der einzelnen Drehzahlbereiche. Der Koordinator 200 gibt diese Haupt-Drehmomentanforderung 303 über dem gemeinsamen Drehzahlbereich $[n_G]$ an das Modell 210 des Verbrennungsmotors weiter.

In Figur 4 ist in einem Diagramm neben der Haupt-Drehmomentanforderung 303 gemäß Figur 3 auch ein mögliches Abgabedrehmoment 401 des Verbrennungsmotors 110 dargestellt. Das Abgabedrehmoment 401 über der Drehzahl $n$ beschreibt das bei jeder Drehzahl maximal von dem Verbrennungsmotor 110 erzeugbare Drehmoment. Das Abgabedrehmoment 401 wird in Ausgestaltung ebenfalls vom Modell 210 des Verbrennungsmotors bestimmt und an den Koordinator 200 übergeben. Der Koordinator verknüpft bzw. vergleicht die Haupt-Drehmomentanforderung 303 mit der möglichen Drehmomentabgabe 401 und bestimmt daraus einen Abgabedrehzahlbereich $[n_A]$, in dem der Verbrennungsmotor 110 zur Abgabe des angeforderten Drehmoments 303 in der Lage ist. Auf diese Weise wird ein Bereich bzw. eine Menge von Drehzahlen 402 über dem Abgabedrehzahlbereich $[n_A]$ erhalten, die zur Erfüllung der Leistungsanforderung geeignet sind.

In der hier beschriebenen Ausführungsform der Erfindung werden die Betriebspunkte umfassend die Drehmomente 402 über dem Abgabedrehzahlbereich $[n_A]$ wieder an das Modell 210 des Verbrennungsmotors 110 übergeben, damit dieses die zugehörige Kostengröße bestimmt. Dabei wird für alle möglichen Betriebspunkte (Drehzahl + Drehmoment) eine Kostengröße, insbesondere ein Kraftstoffverbrauch (Liter/Stunde) ermittelt. Das Minimum der Verbrauchskurve definiert den verbrauchsoptimalen Maschinenbetriebszustand. Der Koordinator 200 wählt eine geeignete Drehzahl $n_0$ im zulässigen Abgabedrehzahlbereich $[n_A]$ und gibt diese dem Verbrennungsmotor sowie gegebenenfalls anderen Verbrauchern vor. Wie erwähnt, können neben dem optimalen Gesamtwirkungsgrad weitere Kriterien bei der Betriebspunktwahl berücksichtigt werden. Dabei handelt es sich insbesondere um einen Leistungsvorhalt, Lebensdauerkriterien, verbrennungsmotorische Anforderungen u.ä.

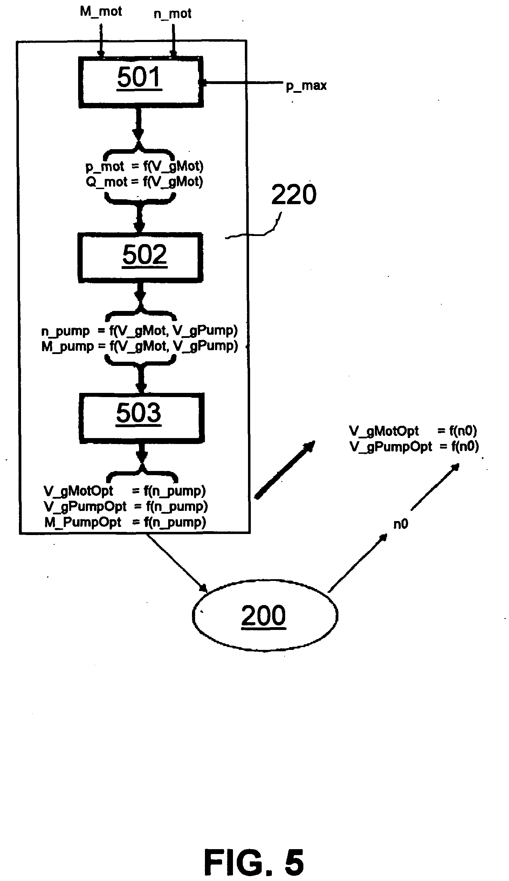

Die Erfindung soll nun am Beispiel des Modells "Antriebsstrang" unter Bezugnahme auf Figur 5 näher erläutert werden, in der eine bevorzugte Ausführungsform für das Modell 220 gemäß Figur 2 näher dargestellt ist.

Aus dem gegebenen mechanischen Lastpunkt (M_mot, n_mot) am hydrostatischen Motor rechnet ein Modell 501 unter Berücksichtigung des maximal zulässigen Drucks p_max die möglichen hydraulischen Größen p_mot (Druckgefälle am Motor) und Q_mot (Volumenstrom am Eingang des Motors). Dabei wird der Wirkungsgrad des hydrostatischen Motors für die verschiedenen Betriebspunkte berücksichtigt. Optional können die hydraulischen Größen einem Leitungsmodell übergeben werden, um z.B. Strömungsverluste zu berücksichtigen.

Die hydraulischen Größen werden dann einem Pumpenmodell 502 übergeben, welches alle möglichen mechanischen Zustände (Drehzahl n_pump, Moment M_pump) an der hydrostatischen Pumpe in Abhängigkeit von Schöpfvolumen (V_gPump) und Schluckvolumen (V_gMot) ermittelt, so dass sich der Lastpunkt am hydrostatischen Motor realisiert.

Ein interner Optimierer 503 wählt von allen möglichen V_gMot/V_gPump-Kombinationen diejenigen (V_gMotOpt. V_gPumpOpt) aus, die bei gegebener Pumpendrehzahl n_pump den besten hydrostatischen Wirkungsgrad aufweisen. Das notwendige Pumpenmoment M_pumpOpt über Drehzahl wird dem Koordinator 200 übergeben.

Wie bereits weiter oben erläutert, wählt der Koordinator unter Verwendung des dem Verbrennungsmotormodells 210 einen Betriebspunkt bzw. eine Drehzahl n0 aus, welche vorgegeben wird. In Weiterbildung der Erfindung ermittelt bspw. ein Lageregler aus der Pumpendrehzahl n0 und den Größen V_gMotOpt, V_gPumpOpt die Sollwerte für die Schwenkwinkel von hydrostatischem Motor und Pumpe.

Im Falle einer negativen Leistungsanforderung des Verbrauchers kann der beschriebene Algorithmus äquivalent eingesetzt werden. Bspw. bei einem Fahrantrieb liegt eine negative Leistungsanforderung vor, wenn der Fahrer Gas zurücknimmt und das Fahrzeug ausrollt. Je nach gewünschter Haptik kann eine möglichst hohe oder möglichst geringe Bremswirkung durch den Fahrantrieb angestrebt sein.

Soll der Fahrantrieb eine möglichst geringe Bremswirkung aufweisen, erfolgt die Optimierung der hydrostatischen Antriebseinheit wie oben erläutert.

Das Verbrennungsmotor-Modell muss das Schleppmoment des Verbrennungsmotors beschreiben können, auch beim Einsatz der Motorbremse (Stauklappe im Auspuff, Ventilaushebung usw.). Anstelle einer Verbrauchsinformation gibt das Verbrennungsmotor-Modell eine andere geeignete Kostenfunktion aus. Diese kann z.B. die Abweichung zwischen benötigtem und verfügbarem Schleppmoment sein:

$$K\_Diesel = f(n\_pump) = M\_pumpOpt(n\_pump) - M\_Diesel(n\_pump)$$

Anhand der Kostenfunktion wählt der Betriebspunktkoordinator den Zustand (Drehzahl) aus. Das Optimum ist durch das Minimum von K_Diesel bestimmt.

Soll der Fahrantrieb eine möglichst hohe Bremswirkung aufweisen, erfolgt die Optimierung des hydrostatischen Antriebs ebenfalls im Wesentlichen äquivalent. Jedoch muss der eingesetzte Optimierer den niedrigsten hydrostatischen Wirkungsgrad anstreben. Die Optimierung in diesem Anwendungsfall ist durch das Maximum der Kostenfunktion K_Diesel festgelegt.

Nachfolgend soll die Erfindung anhand einiger Beispiele für Verbrauchermodelle näher erläutert werden, wobei zunächst ein von einem hydrostatischen Antrieb angetriebener Lüfter betrachtet werden soll. Maßgeblich ist hier zunächst die angeforderte Lüfterdrehzel $n_L$, die bspw. von einer Kühlwasserregelung vorgegeben wird.

Der Drehmomentbedarf $M_L$ des Lüfters ist in guter Näherung nur von seiner Drehzahl $n_L$ abhängig und kann einfach berechnet werden zu $M_L = C_L n_L^2$. $C_L$ ist eine für den speziellen Lüfter charakteristische Konstante.

Wird der Lüfter direkt von einem hydrostatischen Konstantmotor mit dem Nennvolumen $V_{gMot}$ angetrieben, dann ist die Lüfterdrehzahl gleich der Drehzahl des Hydromotors und das Lüfterdrehmoment gleich dem Drehmoment des Hydromotors. Daraus kann der benötigte (Differenz-)Öldruck $p_{Hyd}$ und der Ölstrom $q_{Hyd}$ berechnet werden zu:

$$q_{Hyd} = \frac{V_{gMot} \cdot n_L}{1000 \cdot \eta_{vMot}}; p_{Hyd} = \frac{M_L \cdot 20 \cdot \pi}{V_{gMot} \cdot \eta_{mhMot}}$$

mit $\eta_{vMot}$:     Volumetrischer Wirkungsgrad des Hydromotors

$\eta_{mhMot}$:     mechanisch-hydraulischer Wirkungsgrad des Hydromotors

Wird der Hydromotor exklusiv von einer Verstellpumpe mit dem Volumen $V_{gPump}$ gespeist, berechnen sich

Drehzahl $n_{pump}$ und Drehmoment $M_{pump}$ an der Pumpe aus den gegebenen Größen Öldruck $p_{Hyd}$ und Ölstrom $q_{Hyd}$. Die Berechnung wird zweckmäßigerweise für alle $V_{gPump}$ im Intervall [$V_{gPumpMin}$, $V_{gPumpMax}$] durchgeführt, d.h. $n_{pump}$ und $M_{pump}$ sind im Allgemeinen keine Einzelwerte, sondern Funktionen der Variablen $V_{gPump}$:

$$n_{Pump}(V_{gPump}) = \frac{q_{Hyd} \cdot 1000}{V_{gPump} \cdot \eta_{vPump}} \; ; \; M_{Pump}(V_{gPump}) = \frac{V_{gPump} \cdot p_{Hyd}}{20 \cdot \pi \cdot \eta_{mhPump}}$$

mit

$$V_{gPumpMin} = \frac{q_{Hyd} \cdot 1000 \cdot \eta_{vPump}}{n_{PumpMax}} \; ; \; V_{gPumpMax} = V_{gPumpNenn}$$

Durch Umstellen und Einsetzen erhält man eine Funktion $M_{pump}(n_{pump})$:

$$M_{Pump}(n_{Pump}) = \frac{q_{Hyd} \cdot 50 \cdot p_{Hyd}}{n_{Pump} \cdot \eta_{vPump} \cdot \pi \cdot \eta_{mhPump}}$$

Diese Funktion entspricht einer Leistungshyperbel, welche von dem Wirkungsgrad des hydrostatischen Lüfterantriebs überlagert ist:

Wenn die Hydropumpe wiederum direkt vom Dieselmotor angetrieben wird, so ist die Drehzahl der Hydropumpe gleich der Drehzahl des Dieselmotors und das Drehmoment der Hydropumpe wird gewichtet mit dem Faktor 1 am Dieselmotor als aufzubringendes Teil-Drehmoment abgenommen. Die Funktion $M_{pump}(n_{pump})$ wird, wie bspw. oben anhand Figur 2 erläutert, dem Betriebspunktkoordinator übergeben. Dieser koordiniert die Anforderung mit konkurrierenden Anforderungen anderer Verbraucher und übergibt den koordinierten Gesamtwert einem Dieselmotor-Modell. Danach wird die Dieselmotordrehzahl $n_{DieselSet}$ (bzw. n0) unter Berücksichtigung einer Kostengröße vorgegeben.

Für die gegebene Dieselmotordrehzahl (und damit auch die Pumpendrehzahl $n_{pumpSet}$) kann das benötigte Volumen $V_{gPumpSet}$ der Pumpe ermittelt werden zu:

$$V_{gPumpSet} = \frac{q_{Hyd} \cdot 1000}{n_{PumpSet} \cdot \eta_{vPump}}$$

Dieses kann dann in eine geeignete Ansteuerung der Pumpe umgesetzt werden.

Als weiteres Beispiel soll das Modell eines Hubzylinders, bspw. bei einem Gabelstapler, beschrieben werden. Aus einer Auslenkung $a_{JS}$ des Joysticks wird die gewünschte Hubgeschwindigkeit $v_{Zyl}$ berechnet. Zusammen mit Fläche $A_{Zyl}$ des Hydraulikzylinders und dem volumetrischen Wirkungsgrad $\eta_{vZyl}$ berechnet sich der Ölstrom $q_{Hyd}$.

$$v_{Zyl} = f(\alpha_{JS}); \; q_{Hyd} = \frac{v_{Zyl} \cdot A_{Zyl}}{\eta_{vZyl}}$$

Wird der Zylinder exklusiv von einer Verstellpumpe mit dem Volumen $V_{gPump}$ gespeist, kann wie zuvor aus den bekannten Größen Öldruck $p_{Hyd}$ und Ölstrom $q_{Hyd}$ eine Funktion $M_{pump}(n_{pump})$ berechnet werden aus:

$$n_{Pump}(V_{gPump}) = \frac{q_{Hyd} \cdot 1000}{V_{gPump} \cdot \eta_{vPump}} \; ; \; M_{Pump}(V_{gPump}) = \frac{V_{gPump} \cdot p_{Hyd}}{20 \cdot \pi \cdot \eta_{mhPump}}$$

mit

$$V_{gPumpMin} = \frac{q_{Hyd} \cdot 1000 \cdot \eta_{vPump}}{n_{PumpMax}} \; ; \; V_{gPumpMax} = V_{gPumpNenn}$$

**Patentansprüche**

1. Verfahren zum Vorgeben eines Betriebspunktes einer Antriebsmaschine eines Antriebssystems (100) umfassend die Antriebsmaschine (110) und wenigstens zwei von der Antriebsmaschine (110) angetriebene Verbraucher (130, 140, 150) mit folgendem Schritt:

   - Ermitteln (220, 230, 250) je eines momentanen Verbraucher-Leistungsbedarfs der wenigstens zwei Verbraucher (130, 140, 150);

   **gekennzeichnet durch** die folgenden weiteren Schritte:

   - Für jeden ermittelten Verbraucher-Leistungsbedarf Bestimmen (220, 230, 250) wenigstens eines Teil-Anforderungspunkts ($M_1(n)$, $M_2(n)$, $M_i(n)$; 301, 302) der Antriebsmaschine (110) zur Erfüllung des jeweiligen Verbraucher-Leistungsbedarfs, wobei der wenigstens eine Teil-Anforderungspunkt ($M_1(n)$, $M_2(n)$, $M_i(n)$; 301, 302) jeweils ein Teil-Drehmoment und eine Drehzahl umfasst;
   - Bestimmen (200) wenigstens eines Gesamt-Anforderungspunkts ($M(n)$; 303) der Antriebsmaschine (110) basierend auf den bestimmten Teil-Anforderungspunkten ($M_1(n)$, $M_2(n)$, $M_i(n)$);
   - Bestimmen (210) einer Kostengröße ($V(M(n))$) der Antriebsmaschine (110) für den wenigstens einen Gesamt-Anforderungspunkt ($M(n)$; 303);
   - Auswählen (200) des Betriebspunktes (n0) unter Berücksichtigung der Kostengröße ($V(M(n))$) und Vorgeben des Betriebspunktes (n0).

2. Verfahren nach Anspruch 1, wobei wenigstens ein möglicher Betriebspunkt (402) der Antriebsmaschine (110) bestimmt wird, in dem die Antriebsmaschine (110) zur Erfüllung der Gesamt-Anforderung ($M(n)$; 303) in der Lage ist, und der Betriebspunkt (n0) aus den möglichen Betriebspunkten (402) ausgewählt wird (200).

3. Verfahren nach Anspruch 2, wobei die Kostengröße ($V(M(n))$) der Antriebsmaschine (110) nur für die möglichen Betriebspunkte (402) bestimmt wird.

4. Verfahren nach einem der vorstehenden Ansprüche, wobei das Vorgeben des Betriebspunktes das Vorgeben einer Drehzahl (n0) umfasst.

5. Verfahren nach einem der vorstehenden Ansprüche, wobei der wenigstens eine Teil-Anforderungspunkt und/oder der wenigstens eine Gesamt-Anforderungspunkt jeweils eine Teil- bzw. Gesamt-Abgabeleistung und den zugehörigen Wirkungsgrad der Leistungsübertragung umfassen.

6. Verfahren nach einem der vorstehenden Ansprüche, wobei der wenigstens eine Gesamt-Anforderungspunkt ($M(n)$; 303) jeweils ein Gesamt-Drehmoment und eine Drehzahl umfasst.

7. Verfahren nach Anspruch 6, wobei das Bestimmen des wenigstens einen Gesamt-Anforderungspunkts das Bestimmen eines Gesamt-Drehmoments ($M(n)$; 303) in Abhängigkeit von der Drehzahl (n) über einem gemeinsamen Drehzahlbereich ($[n_G]$) umfasst.

8. Verfahren nach Anspruch 7, wobei das Gesamt-Drehmoment ($M(n)$; 303) als Summe der einzelnen Teil-Drehmomente ($M_1(n)$, $M_2(n)$, $M_i(n)$; 301, 302) und/oder der gemeinsame Drehzahlbereich ($[n_G]$) als Schnittmenge der einzelnen Drehzahlbereiche bestimmt wird.

9. Verfahren nach Anspruch 7 oder 8, wobei ein maximal von der Antriebsmaschine (110) erzeugbares Drehmoment (401) über der Drehzahl (n) bestimmt und mit dem Gesamt-Drehmoment ($M(n)$; 303) verglichen wird, wobei auf Grundlage des Vergleichs ein Abgabedrehzahlbereich ($[n_A]$) bestimmt wird, in dem die Antriebsmaschine (110) zur Abgabe des Gesamt-Drehmoments (402) in der Lage ist.

**10.** Verfahren nach Anspruch 9, wobei die Kostengröße (V(M(n))) der Antriebsmaschine (110) nur für den Abgabedrehzahlbereich ([n$_A$]) bestimmt wird.

**Claims**

**1.** Method for predefining an operating point of a drive machine of a drive system (100), comprising the drive machine (110) and at least two loads (130, 140, 150) which are driven by the drive machine (110), having the following step:

- identification (220, 230, 250) of in each case one instantaneous load power demand of the at least two loads (130, 140, 150);

**characterized by** the following further steps:

- determination (220, 230, 250) of at least one partial request point (M$_1$(n), M$_2$(n), M$_i$(n); 301, 302) of the drive machine (110) for each identified load power demand in order to meet the respective load power demand, wherein the at least one partial request point (M$_1$(n), M$_2$(n), M$_i$(n); 301, 302) in each case comprises a partial torque and a rotational speed;
- determination (200) of at least one overall request point (M(n); 303) of the drive machine (110) on the basis of the specific partial request points (M$_1$(n), M$_2$(n), M$_i$(n)) ;
- determination (210) of a cost variable (V(M(n))) of the drive machine (110) for the at least one overall request point (M(n); 303); and
- selection (200) of the operating point (n0) taking into account the cost variable (V(M(n))) and predefining of the operating point (n0).

**2.** Method according to Claim 1, wherein at least one possible operating point (402) of the drive machine (110) is determined at which the drive machine (110) is capable of meeting the overall request (M(n); 303), and the operating point (n0) is selected (200) from the possible operating points (402).

**3.** Method according to Claim 2, wherein the cost variable (V(M(n))) of the drive machine (110) is determined only for the possible operating points (402).

**4.** Method according to one of the preceding claims, wherein the predefining of the operating point comprises the predefining of a rotational speed (n0).

**5.** Method according to one of the preceding claims, wherein the at least one partial request point and/or the at least one overall request point each respectively comprise a partial output power or overall output power and the associated efficiency level of the power transmission.

**6.** Method according to one of the preceding claims, wherein the at least one overall request point (M(n); 303) in each case comprises an overall torque and a rotational speed.

**7.** Method according to Claim 6, wherein the determination of the at least one overall request point comprises the determination of an overall torque (M(n); 303) as a function of the rotational speed (n) over a common rotational speed range ([n$_G$]).

**8.** Method according to Claim 7, wherein the overall torque (M(n); 303) is determined as a sum of the individual partial torques (M$_1$(n), M$_2$(n), M$_i$(n); 301, 302) and/or the common rotational speed range ([n$_G$]) as an intersecting set of the individual rotational speed ranges.

**9.** Method according to Claim 7 or 8, wherein a maximum torque (401) which can be generated by the drive machine (110) is determined by means of the rotational speed (n) and is compared with the overall torque (M(n); 303), wherein on the basis of the comparison an output rotational speed range ([n$_A$]) in which the drive machine (110) is capable of outputting the overall torque (402) is determined.

**10.** Method according to Claim 9, wherein the cost variable (V(M(n))) of the drive machine (110) is determined only for the output rotational speed range ([n$_A$]).

**Revendications**

1. Procédé pour prédéfinir un point de fonctionnement d'une machine d'entraînement d'un système d'entraînement (100) comprenant la machine d'entraînement (110) et au moins deux dispositifs consommateurs (130, 140, 150) entraînés par la machine d'entraînement (110), comportant les étapes consistant à :

   - déterminer (220, 230, 250) une demande instantanée de puissance de dispositif consommateur respective des au moins deux dispositifs consommateurs (130, 140, 150) ;

   **caractérisé par** les étapes supplémentaires consistant à :

   - pour chaque demande de puissance de dispositif consommateur déterminée, déterminer (220, 230, 250) au moins un point de demande partielle ($M_1(n)$, $M_2(n)$, $M_i(n)$ ; 301, 302) de la machine d'entraînement (110) pour satisfaire aux besoins de puissance respectifs des dispositifs consommateurs, dans lequel l'au moins un point de demande partielle ($M_1(n)$, $M_2(n)$, $M_i(n)$ ; 301, 302) comprend respectivement un couple de rotation partiel et une vitesse de rotation ;
   - déterminer (200) au moins un point de demande totale ($M(n)$ ; 303) de la machine d'entraînement (110) sur la base des points de demande partielle déterminés ($M_1(n)$, $M_2(n)$, $M_i(n)$) ;
   - déterminer (210) un facteur de coût ($V(M(n))$) de la machine d'entraînement (110) pour l'au moins un point de demande totale ($M(n)$ ; 303) ;
   - sélectionner (200) le point de fonctionnement (n0) en tenant compte du facteur de coût ($V(M(n))$) et prédéterminer le point de fonctionnement (n0).

2. Procédé selon la revendication 1, dans lequel au moins un point de fonctionnement possible (402) de la machine d'entraînement (110) est déterminé en faisant en sorte que la machine d'entraînement (110) soit en mesure de satisfaire la demande totale ($M(n)$ ; 303) et en sélectionnant (200) le point de fonctionnement (n0) parmi les points de fonctionnement possibles (402).

3. Procédé selon la revendication 2, dans lequel le facteur de coût ($V(M(n))$) de la machine d'entraînement (110) n'est déterminé que pour les points de fonctionnement possibles (402).

4. Procédé selon l'une quelconque des revendications précédentes, dans lequel la prédétermination du point de fonctionnement comprend la prédétermination d'une vitesse de rotation (n0).

5. Procédé selon l'une quelconque des revendications précédentes, dans lequel l'au moins un point de demande partielle et/ou l'au moins un point de demande totale comprend/comprennent respectivement une puissance de sortie partielle ou totale et le rendement associé de la transmission de puissance.

6. Procédé selon l'une quelconque des revendications précédentes, dans lequel l'au moins un point de demande totale ($M(n)$ ; 303) comprend respectivement un couple de rotation total et une vitesse de rotation.

7. Procédé selon la revendication 6, dans lequel la détermination de l'au moins un point de demande totale comprend la détermination d'un couple de rotation total ($M(n)$ ; 303) en fonction de la vitesse de rotation (n) sur une plage de vitesses de rotation totale ($[n_G]$).

8. Procédé selon la revendication 7, dans lequel le couple de rotation total ($M(n)$ ; 303) est déterminé comme étant la somme des couples de rotation partiels individuels ($M_1(n)$, $M_2(n)$, $M_i(n)$ ; 301, 302) et/ou la plage de vitesse de rotation totale ($[n_G]$) est déterminée comme étant l'intersection des plages de vitesse de rotation individuelles.

9. Procédé selon la revendication 7 ou 8, dans lequel un couple de rotation maximal (401) pouvant être délivré par la machine d'entraînement (110) est déterminé par l'intermédiaire de la vitesse de rotation (n) et est comparé au couple de rotation total ($M(n)$ ; 303), dans lequel une plage de vitesse de rotation de sortie ($[n_A]$) est déterminée en faisant en sorte que la machine d'entraînement (110) soit en mesure de délivrer le couple de rotation total (402).

10. Procédé selon la revendication 9, dans lequel le facteur de coût ($V(M(n))$) de la machine d'entraînement (110) n'est déterminé que pour la plage de vitesses de rotation de sortie ($[n_A]$).

**FIG. 1**

**FIG. 2**

**FIG. 3**

**FIG. 4**

M_mot    n_mot

**501** ────── p_max

p_mot = f(V_gMot)
Q_mot = f(V_gMot)

**220**

**502**

n_pump = f(V_gMot, V_gPump)
M_pump = f(V_gMot, V_gPump)

**503**

V_gMotOpt = f(n_pump)
V_gPumpOpt = f(n_pump)
M_PumpOpt = f(n_pump)

V_gMotOpt = f(n0)
V_gPumpOpt = f(n0)

**200**

n0

# FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1754643 A1

- US 20020123836 A1